# EUROPEAN PATENT APPLICATION

(11) **EP 4 387 307 A1**
(43) Date of publication of application: **19.06.2024**
(21) Application number: 22866944.6
(22) Date of filing: 10.03.2022
(51) Int. Cl.: H04W 16/28, H04W 72/54, H04W 28/18, H04W 88/02

(54) **COMMUNICATION DEVICE, COMMUNICATION METHOD, AND COMMUNICATION SYSTEM**

(30) Priority: 09.09.2021 JP 2021147081
(71) Applicant: Sony Group Corporation, Tokyo 108-0075 (JP)
(72) Inventor: IKEDA, Masahiko, Tokyo 108-0075 (JP); TOYODA, Naoyuki, Tokyo 108-0075 (JP); TAKADA, Takuma, Tokyo 108-0075 (JP); SHIMIZU, Yojiro, Tokyo 108-0075 (JP); KONNO, Yoshio, Tokyo 108-0075 (JP)
(74) Representative: D Young & Co LLP
(86) International application number: PCT/JP2022/010511
(87) International publication number: WO 2023/037610

(57) **Abstract**

A communication device (100) includes a communication unit (110) and a control unit (150). The communication unit (110) performs wireless communication using at least one of a plurality of beams. The control unit (150) acquires service communication quality corresponding to quality requested on a service. The control unit (150) obtains, by estimation, an estimated communication quality achievable by the communication unit (110), based on a radio wave propagation environment. Even in a case where a beam quality of a non-currently working beam, a beam which is not being used for wireless communication, is higher than the beam quality of a currently working beam, which is being used for wireless communication, the control unit (150) maintains the communication by the currently working beam in a case where the estimated communication quality is the service communication quality or more. In a case where the estimated communication quality is below the service communication quality, the control unit (150) determines switching of the beam.

## Description

### Field

The present disclosure relates to a communication device, a communication method, and a communication system. Background

In recent years, due to demands for a wider band communication, utilization of a high frequency band referred to as a millimeter wave has been examined. While the millimeter wave is expected to achieve a high transmission rate, because of its high straightness and high attenuation, the higher the frequency, the less likely the millimeter wave is successfully transmitted. To handle this, beamforming is performed to narrow the transmission directions of the radio waves so as to obtain higher gains. For example, there is a terminal device that communicates with a base station device by selecting a beam with high radio quality among a plurality of beams.

### Citation List

### Patent Literature

Patent Literature 1: JP 2020-162103 A

### Summary

### Technical Problem

The terminal device in the literature performs, in response to an instruction from a base station device, measurement of radio quality of a beam (for example, electric field intensity, etc. hereinafter, referred to as a beam quality), and reports the measurement result to the base station device. The base station device instructs the terminal device to perform communication by switching to a beam with the highest radio quality (for example, with highest electric field intensity), for example.

The technique in the literature uses, for example, beam switching focusing on the capacity in a cell, such as the total communication volume and the number of terminal devices accommodated in the cell. For example, using a higher modulation and coding scheme (MCS) for a terminal device having a high electric field intensity can improve the communication efficiency. Accordingly, the base station device in the literature instructs the terminal device to use a beam having high electric field intensity, in other words, high radio quality.

On the other hand, for example, systems providing a service in real time such as streaming place higher importance on achieving continuity and low latency of communication rather than capacity in a cell.

However, using the electric field intensity as an index for beam switching as described above might increase occurrences of beam switching. For example, when a plurality of beams having substantially the same electric field intensity is usable, there is a possibility of frequent occurrence of switching of the beams to be used.

Occurrence of frequent beam switching causes occurrence of frequent beam switching processing, which might have an impact on achievement of communication continuity and low latency.

In view of this, the present disclosure provides a mechanism capable of further suppressing degradation in communication continuity and low latency in a communication using a plurality of beams.

Note that the above problem or target is merely one of a plurality of problems or targets that can be solved or achieved by a plurality of embodiments disclosed in the present specification.

### Solution to Problem

According to the present disclosure, a communication device is provided. The communication device includes a communication unit and a control unit. The communication unit performs wireless communication using at least one of a plurality of beams. The control unit acquires service communication quality corresponding to quality requested on a service. The control unit obtains, by estimation, an estimated communication quality achievable by the communication unit, based on a radio wave propagation environment. Even in a case where a beam quality of a non-currently working beam, a beam which is not being used for wireless communication, is higher than the beam quality of a currently working beam, which is being used for wireless communication, the control unit maintains the communication by the currently working beam in a case where the estimated communication quality is the service communication quality or more. In a case where the estimated communication quality is below the service communication quality, the control unit determines switching of the beam.

### Brief Description of Drawings

FIG. 1 is a diagram illustrating a configuration example of a communication system according to a proposed technology of the present disclosure.
FIG. 2 is a diagram illustrating an example of a beam switching method performed by a base station device.
FIG. 3 is a diagram illustrating an example of a beam switching method according to the proposed technology of the present disclosure.
FIG. 4 is a diagram illustrating a configuration example of a base station device according to a first embodiment of the present disclosure.
FIG. 5 is a diagram illustrating a configuration example of a communication device according to the first embodiment of the present disclosure.
FIG. 6 is a diagram illustrating a configuration example of a terminal device according to the first embodiment of the present disclosure.
FIG. 7 is a flowchart illustrating an example of a flow of threshold calculation processing according to the first embodiment of the present disclosure.
FIG. 8 is a flowchart illustrating an example of a flow of beam switching processing according to the first embodiment of the present disclosure.
FIG. 9 is a flowchart illustrating an example of a flow of beam switching processing according to a first modification of the first embodiment of the present disclosure.
FIG. 10 is a flowchart illustrating an example of a flow of beam switching processing according to a second modification of the first embodiment of the present disclosure.
FIG. 11 is a flowchart illustrating an example of a flow of communication rate setting processing according to a second embodiment of the present disclosure.
FIG. 12 is a block diagram illustrating a configuration example of a communication device according to a third embodiment of the present disclosure.
FIG. 13 is a flowchart illustrating an example of a flow of training processing according to the third embodiment of the present disclosure.
FIG. 14 is a flowchart illustrating an example of a flow of prediction switching processing according to the third embodiment of the present disclosure.

### Description of Embodiments

Hereinafter, embodiments of the present disclosure will be described in detail with reference to the accompanying drawings. Note that redundant descriptions will be omitted from the present specification and the drawings by assigning the same reference signs to components having substantially the same functional configuration.

One or more embodiments (implementation examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

### <<1. Introduction>>

### <1.1. Example of communication system>

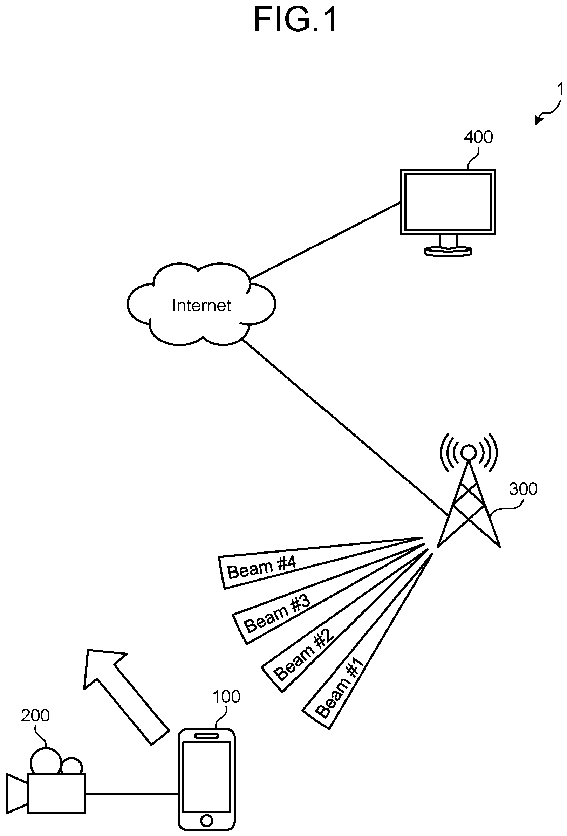

First, an outline of a communication system 1 according to a proposed technology of the present disclosure will be described. FIG. 1 is a diagram illustrating a configuration example of the communication system 1 according to a proposed technology of the present disclosure.

The communication system 1 includes a communication device 100, a terminal device 200, a base station device 300, and an information processing device 400. The terminal device 200 is connected to an upstream network (for example, the Internet) by using a communication function of the communication device 100. In this manner, the communication system 1 illustrated in FIG. 1 has a tethering function.

The communication device 100 is connected to the Internet from a device such as a smartphone or a mobile terminal device by wireless communication via the base station device 300. In the example of FIG. 1, the communication device 100 is connected to the information processing device 400 via the Internet by performing cellular communication using a plurality of beams with the base station device 300.

The terminal device 200 is a device such as a camera or a tablet, for example, and is connected to the communication device 100 via a cable or the like. In the example of FIG. 1, the terminal device 200 transmits a captured image to the information processing device 400 via the communication device 100. For example, the terminal device 200 transmits the captured image to the information processing device 400 in real time. In this manner, the communication system 1 is a system that provides a user (not illustrated) with a service referred to as a real-time streaming service, specifically providing, by live streaming or the like in real time, an image captured by the terminal device 200 to a user who operates the information processing device 400.

The base station device 300 is a communication device that performs cellular communication with the communication device 100. The base station device 300 performs wireless communication with the communication device 100 using beams (beams #1 to #4 in the example of FIG. 1). Although not illustrated in FIG. 1, the communication device 100 may use a beam to communicate with the base station device 300.

The information processing device 400 is, for example, a device such as a personal computer (PC) or a tablet terminal, and displays an image captured by the terminal device 200 on a monitor, thereby providing the real-time streaming service to the user.

### <1.2. Problem>

As described above, in the communication using the beam in the conventional technology, in order to maximize the cell capacity of the base station device 300, the base station device 300 sequentially selects the beam having the best radio wave propagation environment and communicates with the communication device 100.

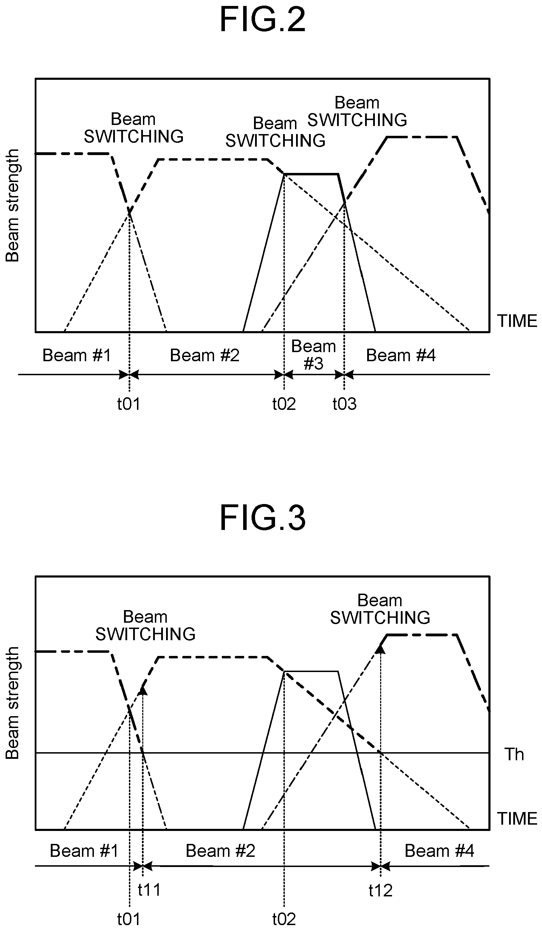

FIG. 2 is a diagram illustrating an example of a beam switching method performed by the base station device 300. FIG. 2 illustrates an example of a beam selected by the base station device 300 in a case, in FIG. 1, where the communication device (user equipment (UE)) 100 moves in the upper left direction (refer to an arrow in FIG. 1).

As the communication device 100 moves, the base station device 300 transitions to the beam with the best radio wave propagation environment and communicates with the communication device 100.

For example, as illustrated in FIG. 2, the base station device 300 first selects beam #1 and communicates with the communication device 100. Next, with the movement of the communication device 100, the beam strength (beam quality) of beam #2 becomes greater than beam #1 at time t01. Accordingly, the base station device 300 communicates with the communication device 100 by beam #2 switched from beam #1.

Thereafter, the beam strength of beam #3 becomes greater than beam #2 at time t02. Accordingly, the base station device 300 communicates with the communication device 100 by beam #3 switched from beam #2. In addition, the beam strength of beam #4 becomes greater than beam #3 at time t03. Accordingly, the base station device 300 communicates with the communication device 100 by beam #4 switched from beam #3.

Narrow beam coverage leads to frequent beam switching as illustrated in FIG. 2. Beam switching involves occurrence of radio link switching, which makes communication discontinuous. Therefore, beam switching might cause an interruption or occurrence of delay in communication, leading to image disturbance.

In a service needing real-time properties such as real-time streaming in particular, occurrence of image disturbance due to beam switching would degrade the quality of the service.

In particular, a 5G communication means (RF unit) includes an array antenna and performs communication using beamforming. Therefore, execution of beam switching by the base station device 300 in accordance with the radio wave propagation environment will lead to the possibility of highly frequent occurrence of beam switching.

In this manner, the beam switching method in the literature has a possibility of frequent occurrence of beam switching, which might lead to degradation in quality of a service needing real-time property. Therefore, there is a need, in communication using a plurality of beams, to suppress degradation in quality of service by suppressing degradation in continuity and low latency.

### <1.3. Outline of proposed technology>

Therefore, in the proposed technology of the present disclosure, the communication device 100 acquires a service communication quality (for example, a requested throughput) corresponding to the service request quality, a quality requested on a particular service. Furthermore, the communication device 100 obtains, by estimation, an estimated communication quality (for example, an estimated throughput) achievable by communication, based on the radio wave propagation environment.

Even in a case where the communication quality of a non-currently working beam, a beam which is not being used for communication, is higher than the communication quality of a currently working beam which is being used for communication, the communication device 100 maintains the communication by the currently working beam when the estimated communication quality is the service communication quality or more.

In a case where the estimated communication quality is below the service communication quality, the communication device 100 determines switching of the beam to be used for communication.

Having determined to switch the currently working beam, the communication device 100 requests the base station device 300 to switch the beam. The base station device 300 selects a beam in response to the request, and instructs the communication device 100 to switch to the selected beam.

FIG. 3 is a diagram illustrating an example of a beam switching method according to the proposed technology of the present disclosure. FIG. 3 illustrates an example of a beam selected by the base station device 300 in a case where the communication device (user equipment (UE)) 100 moves in the upper left direction (refer to an arrow in FIG. 1) in FIG. 1.

For example, as illustrated in FIG. 3, the base station device 300 first selects beam #1 and communicates with the communication device 100. Next, with the movement of the communication device 100, the beam strength (beam quality) of beam #2 becomes greater than beam #1 at time t01. Still, the beam strength of beam #1 is higher than a predetermined threshold Th. Therefore, the communication device 100 does not request the base station device 300 to switch the beam. With this configuration, the communication device 100 and the base station device 300 continue the communication using beam #1.

The predetermined threshold Th is a beam strength (beam quality) at which the estimated throughput does not satisfy the requested throughput. That is, when beam #1 falls below the predetermined threshold Th, the estimated throughput falls below the requested throughput.

Here, in FIG. 3, the beam strength of beam #1 falls below the predetermined threshold Th at time t11. In this case, the communication device 100 requests the base station device 300 to switch the beam. In response to the request, the base station device 300 instructs the communication device 100 to switch the currently working beam from beam #1 to beam #2 having the greatest beam strength. With this instruction, the communication device 100 and the base station device 300 perform communication using beam #2.

Thereafter, the beam strength of beam #3 becomes greater than beam #2 at time t02. However, the beam strength of beam #2 is higher than the predetermined threshold Th. Therefore, the communication device 100 does not request the base station device 300 to switch the beam. With this configuration, the communication device 100 and the base station device 300 continue the communication using beam #2.

Here, in FIG. 3, the beam strength of beam #2 falls below the predetermined threshold Th at time t12. In this case, the communication device 100 requests the base station device 300 to switch the beam. In response to the request, the base station device 300 instructs the communication device 100 to switch the currently working beam from beam #2 to beam #4 having the greatest beam strength. With this instruction, the communication device 100 and the base station device 300 perform communication using beam #4.

In the proposed technology of the present disclosure, even when the radio wave propagation environment (beam quality) of a non-currently working beam (for example, beam #3) is improved after movement of the communication device 100, the communication system 1 does not perform beam switching in a case where the service request quality can be maintained in the radio wave propagation environment (beam quality) of the currently working beam (for example, beam #2).

With this configuration, even when the radio wave propagation environment (beam quality) is not optimal, the communication system 1 can reduce the beam switching frequency while maintaining the predetermined service request quality.

In this manner, the communication system 1 according to the proposed technology of the present disclosure can maintain the quality of service even when the radio wave propagation environment (beam quality) of the non-currently working beam becomes better than the radio wave propagation environment (beam quality) of the currently working beam. In other words, in a case where the estimated throughput can satisfy the requested throughput, the communication system 1 does not switch the beam. In contrast, when the quality of service cannot be maintained by the currently working beam, in other words, when the estimated throughput does not satisfy the requested throughput, the communication system 1 switches the beam.

With this configuration, the communication system 1 can suppress degradation of continuity and low latency of communication due to beam switching while satisfying the quality requested on the service, and can suppress degradation of service quality.

The communication device 100 may downgrade, in accordance with the radio wave propagation environment, the communication quality by downgrading the image quality of the transmission image within a range that satisfies the quality requested on the service. Alternatively, the communication device 100 may upgrade, in accordance with the radio wave propagation environment, the communication quality by upgrading the image quality of the transmission image within a range that satisfies the quality requested on the service.

### <<2. First embodiments

### <2.1. Configuration example of communication system>

### [Configuration example of base station device 300]

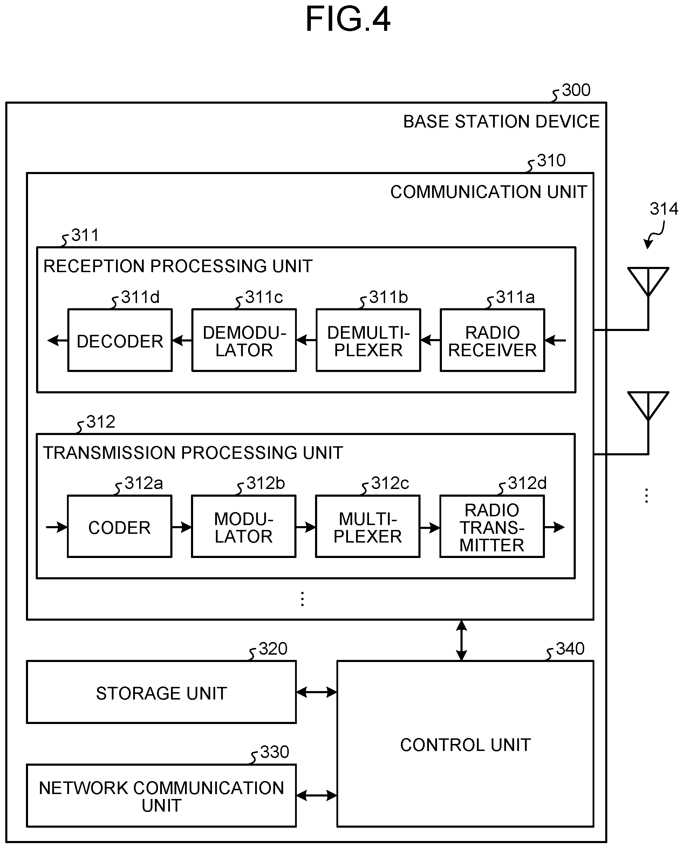

FIG. 4 is a diagram illustrating a configuration example of the base station device 300 according to the first embodiment of the present disclosure.

The base station device 300 includes a communication unit 310, a storage unit 320, a network communication unit 330, and a control unit 340. Note that the configuration illustrated in FIG. 4 is a functional configuration, and the hardware configuration may be different from this. Furthermore, the functions of the base station device 300 may be implemented in a distributed manner in a plurality of physically separated components.

The communication unit 310 is a signal processing unit for performing wireless communication with other wireless communication devices (for example, the communication device 100). The communication unit 310 operates under the control of the control unit 340. The communication unit 310 may support one or a plurality of radio access methods. For example, the communication unit 310 supports both NR and LTE. The communication unit 310 may support W-CDMA and cdma2000 in addition to NR and LTE.

The communication unit 310 includes a reception processing unit 311, a transmission processing unit 312, and an antenna 314. The communication unit 310 may include a plurality of the reception processing units 311, a plurality of the transmission processing units 312, and a plurality of the antennas 314. In a case where the communication unit 310 supports a plurality of radio access methods, individual portions of the communication unit 310 can be configured separately for each of the radio access methods. For example, the reception processing unit 311 and the transmission processing unit 312 may be individually configured depending on LTE and NR.

The reception processing unit 311 processes an uplink signal received via the antenna 314. The reception processing unit 311 includes a radio receiver 311a, a demultiplexer 311b, a demodulator 311c, and a decoder 311d.

For example, the radio receiver 311a performs processing on the uplink signal, such as down-conversion, removal of unnecessary frequency components, amplification level control, orthogonal demodulation, conversion to digital signal, removal of guard interval (cyclic prefix), and frequency domain signal extraction using fast Fourier transform. The demultiplexer 311b demultiplexes an uplink channel such as a physical uplink shared channel (PUSCH) or a physical uplink control channel (PUCCH) and an uplink reference signal from the signal output from the radio receiver 311a.

Using a modulation scheme such as binary phase shift keying (BPSK) or quadrature phase shift keying (QPSK) for the modulation symbol of the uplink channel, the demodulator 311c demodulates the received signal.

The decoder 311d performs decoding processing on the demodulated coded bits of the uplink channel. The decoded uplink data and uplink control information are output to the control unit 340.

The transmission processing unit 312 includes a coder 312a, a modulator 312b, a multiplexer 312c, and a radio transmitter 312d.

The coder 312a encodes the downlink control information and the downlink data input from the control unit 340 by using a coding method such as block coding, convolutional coding, or turbo coding.

The modulator 312b modulates the coded bits output from the coder 312a by a predetermined modulation scheme such as BPSK, QPSK, 16 QAM, 64 QAM, or 256 QAM.

The multiplexer 312c multiplexes the modulation symbol of each of channels and the downlink reference signal and allocates the multiplexed signals on a predetermined resource element. The radio transmitter 312d performs various types of signal processing on the signal from the multiplexer 312c. For example, the radio transmitter 312d performs processing such as conversion to the time domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 312 is transmitted from the antenna 314.

The storage unit 320 is a data readable/writable storage device such as DRAM, SRAM, a flash drive, and a hard disk. The storage unit 320 functions as a storage means in the base station device 300.

The network communication unit 330 is a communication interface for communicating with a node located at a higher level on the network. For example, the network communication unit 330 is a LAN interface such as an NIC. Furthermore, the network communication unit 330 may be a wired interface, or may be a wireless interface. The network communication unit 330 functions as a network communication means of the base station device 300.

The control unit 340 is a controller that controls individual components of the base station device 300. The control unit 340 is realized by a processor (hardware processor) such as a central processing unit (CPU) or a micro processing unit (MPU). For example, the control unit 340 is implemented by execution of various programs stored in the storage device inside the base station device 300 by the processor using random access memory (RAM) or the like as a work area. Note that the control unit 340 may be implemented by an integrated circuit such as an application specific integrated circuit (ASIC) or a field programmable gate array (FPGA). The CPU, MPU, ASIC, and FPGA can all be regarded as controllers.

The control unit 340 selects a beam to be used in response to a request from the communication device 100, for example. The control unit 340 instructs the communication device 100 to use the selected beam.

### [Configuration example of communication device 100]

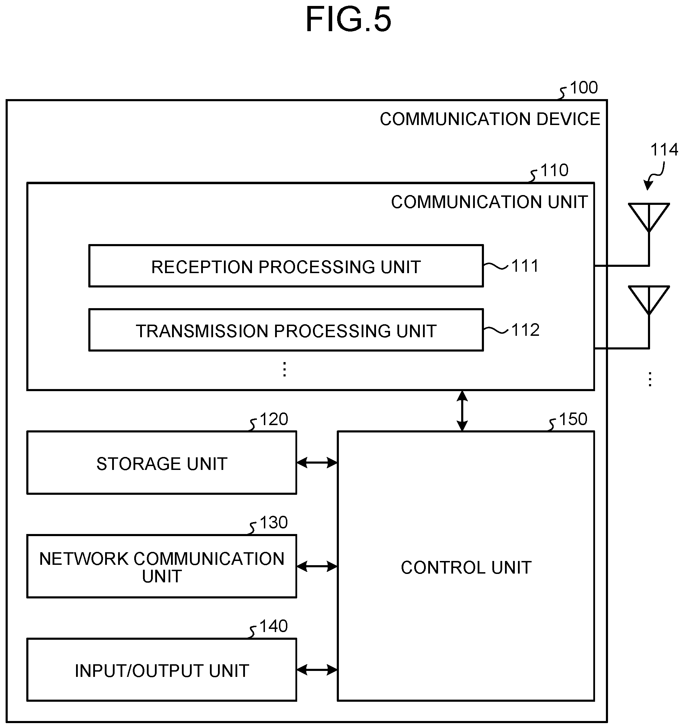

FIG. 5 is a diagram illustrating a configuration example of the communication device 100 according to the first embodiment of the present disclosure.

The communication device 100 includes a communication unit 110, a storage unit 120, a network communication unit 130, an input/output unit 140, and a control unit 150. The configuration illustrated in FIG. 5 is a functional configuration, and the hardware configuration may be different from this. Furthermore, the functions of the communication device 100 may be implemented in a distributed manner in a plurality of physically separated configurations.

The communication unit 110 is a signal processing unit for performing wireless communication with other wireless communication devices (for example, the base station device 300). The communication unit 110 operates under the control of the control unit 150. The communication unit 110 may support one or a plurality of radio access methods. For example, the communication unit 110 supports both NR and LTE. The communication unit 110 may support W-CDMA and cdma2000 in addition to NR and LTE.

The communication unit 110 includes a reception processing unit 111, a transmission processing unit 112, and an antenna 114. The communication unit 110 may include a plurality of the reception processing units 111, a plurality of the transmission processing units 112, and a plurality of the antennas 114. Configurations of the communication unit 110, the reception processing unit 111, the transmission processing unit 112, and the antenna 114 are similar to those of the communication unit 310, the reception processing unit 311, the transmission processing unit 312, and the antenna 314 of the base station device 300.

The storage unit 120 is a data readable/writable storage device such as DRAM, SRAM, a flash drive, and a hard disk. The storage unit 120 functions as a storage means for the communication device 100. The configuration of the storage unit 120 is similar to the configuration of the storage unit 320 of the base station device 300.

The network communication unit 130 is a communication interface for communicating with a node located at a higher level on the network. For example, the network communication unit 130 is a LAN interface such as an NIC. Furthermore, the network communication unit 130 may be a wired interface, or may be a wireless interface. The network communication unit 130 functions as a network communication means of the communication device 100. The network communication unit 130 communicates with the base station device 300 under the control of the control unit 150.

The input/output unit 140 is a user interface for exchanging information with a user who operates the communication device 100. For example, the input/output unit 140 is an operation device such as a keyboard, a mouse, operation keys, and a touch panel, used by a user to perform various operations. Alternatively, the input/output unit 140 is a display device such as a liquid crystal display, or an organic electroluminescence (EL) display. The input/output unit 140 may be an acoustic device such as a speaker or a buzzer. Furthermore, the input/output unit 140 may be a lighting device such as a light emitting diode (LED) lamp. The input/output unit 140 functions as an input/output means (input means, output means, operation means, or notification means) provided on the communication device 100.

The control unit 150 is a controller that controls individual parts of the communication device 100. The control unit 150 is realized by a processor (hardware processor) such as a CPU or MPU, for example. For example, the control unit 150 is actualized by a processor executing various programs stored in a storage device inside the communication device 100 using RAM or the like as a work area. Note that the control unit 150 may be actualized by an integrated circuit such as an ASIC or an FPGA. The CPU, MPU, ASIC, and FPGA can all be regarded as controllers. The control unit 150 executes communication processing to be described later.

### [Configuration example of terminal device 200]

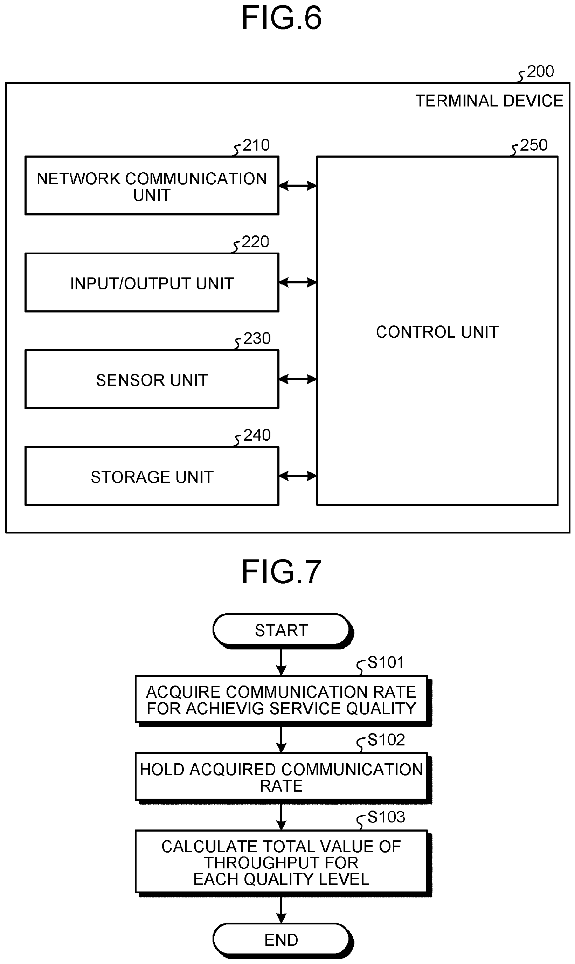

FIG. 6 is a diagram illustrating a configuration example of the terminal device 200 according to the first embodiment of the present disclosure.

The terminal device 200 includes a network communication unit 210, an input/output unit 220, a sensor unit 230, a storage unit 240, and a control unit 250. Note that the configuration illustrated in FIG. 6 is a functional configuration, and the hardware configuration may be different from this. Furthermore, the functions of the terminal device 200 may be implemented in a distributed manner in a plurality of physically separated configurations.

The network communication unit 210 is a communication interface for communicating with a node located at a higher level on the network. For example, the network communication unit 210 is a LAN interface such as an NIC. Furthermore, the network communication unit 210 may be a wired interface, or may be a wireless interface. The network communication unit 210 functions as a network communication means of the terminal device 200. The network communication unit 210 communicates with other devices (for example, the communication device 100) under the control of the control unit 250.

The input/output unit 220 is a user interface for exchanging information with the user. For example, the input/output unit 220 is an operation device such as a keyboard, a mouse, operation keys, and a touch panel, used by a user to perform various operations. Alternatively, the input/output unit 220 is a display device such as a liquid crystal display, or an organic electroluminescence (EL) display. The input/output unit 220 may be an acoustic device such as a speaker or a buzzer. Furthermore, the input/output unit 220 may be a lighting device such as a light emitting diode (LED) lamp. The input/output unit 220 functions as an input/output means (input means, output means, operation means, or notification means) provided on the terminal device 200.

The sensor unit 230 is, for example, a camera that captures an image around the terminal device 200. In this case, the sensor unit 230 is a camera that includes an imaging element such as a Charge Coupled Device (CCD) or a Complementary Metal Oxide Semiconductor (CMOS) and generates a captured image. Note that the sensor unit 230 is not limited to a camera, and may be a device that acquires surrounding sound, such as a microphone, for example.

The storage unit 240 is a data readable/writable storage device such as DRAM, SRAM, a flash drive, and a hard disk. The storage unit 240 functions as a storage means in the terminal device 200.

The control unit 250 is a controller that controls individual parts of the terminal device 200. The control unit 250 is implemented by a processor (hardware processor) such as a CPU or MPU, for example. For example, the control unit 250 is implemented by a processor executing various programs stored in a storage device inside the terminal device 200 using RAM or the like as a work area. Note that the control unit 250 may be actualized by an integrated circuit such as an ASIC or an FPGA. The CPU, MPU, ASIC, and FPGA can all be regarded as controllers.

The control unit 250 controls, for example, functions of an application layer and other layers of the terminal device 200. The control unit 250 operates as, for example, an application control unit that controls an application function of transmitting an image captured by the sensor unit 230 at a predetermined transmission rate.

The control unit 250 determines the transmission rate of data (for example, an image) according to quality requested in a service (here, the real-time streaming service). For example, the control unit 250 determines a transmission rate corresponding to each of a plurality of service quality levels Furthermore, the control unit 250 determines a transmission rate of an image based on a notification from the communication device 100 or the like.

### <2.2. Communication processing>

Hereinafter, communication processing executed in the communication system 1 according to the first embodiment of the present disclosure will be described.

### [Threshold calculation processing]

FIG. 7 is a flowchart illustrating an example of a flow of threshold calculation processing according to the first embodiment of the present disclosure. The threshold calculation processing illustrated in FIG. 7 is executed by the communication device 100, for example, at a timing when communication with the base station device 300 is established.

First, the communication device 100 acquires a communication rate (transmission rate) for achieving the service quality from the terminal device 200 (Step S101) . Such a communication rate is, for example, communication quality set by the terminal device 200 for each of a plurality of levels in accordance with a requested service quality. The communication rate is, for example, a throughput (hereinafter, also referred to as requested throughput) of Layer 1.

Here, there may be a certain range of acceptable quality levels in one service. For example, in the case of video transmission, even when the allowable service quality is HD/30 fps-10 Mbps, the terminal device 200 can set the requested communication quality (requested throughput) of a plurality of quality levels between 20 Mbps and 10 Mbps by changing the compression rate or the like.

For example, the terminal device 200 sets the communication rate (TP_APP_H/M/L/0) for achieving the quality level for each of a plurality of quality levels (high/middle/low/stop) of the service quality.

The communication device 100 holds the communication rate (TP_APP_H/M/L/0) acquired from the terminal device 200 (Step S102) .

Note that, for example, in a case where there is a plurality of applications, the communication device 100 acquires and holds the communication rate for each application. For example, when relaying communication between a plurality of terminal devices 200, the communication device 100 acquires and holds a communication rate for each of the terminal devices 200. Alternatively, in a case where one terminal device 200 provides a plurality of applications (for example, video transmission and audio transmission), the communication device 100 acquires and holds the communication rate for each of the plurality of applications from one terminal device 200.

Next, the communication device 100 calculates a total value (throughput total value) of the communication rates (throughputs) acquired for each of the plurality of applications, for each quality level (Step S103). The communication device 100 calculates the throughput total value (TP_APP_SUM_H/M/L) for each quality level.

### [Beam switching processing]

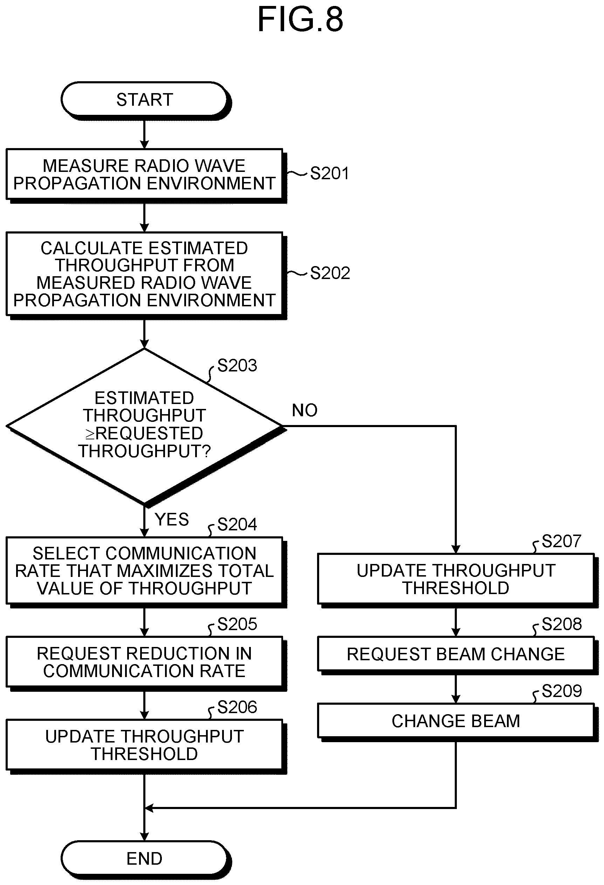

FIG. 8 is a flowchart illustrating an example of a flow of beam switching processing according to the first embodiment of the present disclosure.

The communication device 100 sets a throughput total value (TP_APP_SUM_H) having the highest quality level among the throughput total values of the individual quality levels calculated in the threshold calculation processing, as the throughput threshold. In addition, the communication device 100 sets the throughput total value (TP_APP_SUM_L) having the lowest quality level, as the minimum requested throughput (requested throughput).

The communication device 100 starts communication with the base station device 300 at a communication rate (throughput) having the highest quality level in all applications. Thereafter, the communication device 100 executes the beam switching processing illustrated in FIG. 8 at a measurement cycle. The measurement cycle may be a preset cycle or a cycle set by a user or the like.

As illustrated in FIG. 8, the communication device 100 measures the radio wave propagation environment in the currently working beam (Step S201). For example, the communication device 100 can measure the electric field intensity of the beam as the radio wave propagation environment. Examples of the electric field intensity of the beam include Reference Signal Received Power (RSRP), Reference Signal Received Quality (RSRQ), and Signal-to-Interference plus Noise power Ratio (SINR). Alternatively, the communication device 100 may measure, for example, a Block Error Rate (BLER), a Modulation and Coding Scheme (MCS), a Transport Block Size (TBS), or the like as a radio wave propagation environment. The communication device 100 calculates a measurement value of the radio wave propagation environment in Layer 1, for example.

Next, the communication device 100 calculates an estimated throughput from the measured radio wave propagation environment (Step S202). Based on the calculated measurement value of the radio wave propagation environment, the communication device 100 calculates a throughput that can be currently provided, as the estimated throughput. At this time, the communication device 100 may set, as the estimated throughput, a result (TP_L1*k) obtained by multiplying the calculated throughput (TP_L1) by a coefficient k in consideration of the overhead for the protocol header.

The communication device 100 determines whether the estimated throughput is the requested throughput or more (Step S203).

When the estimated throughput is the requested throughput or more (Step S203; Yes), the communication device 100 selects the communication rate that maximizes the total value (TP_APP_SUM) of the throughput (TP_APP_H/M/L) in each application (Step S204). At this time, the communication device 100 selects the communication rate so as not to allow the total value of the throughput in each application to exceed the estimated throughput (so as to satisfy TP_L1*k>TP_APP_SUM).

For example, here is an assumable case where the communication device 100 relays the transmission of a first image from the first terminal device 200 that executes a first application, and relays the transmission of a second image from the second terminal device 200 that executes a second application. In this case, the communication device 100 selects the communication rate for each of the first and second applications so as not to allow the total value of the throughput in the first and second applications to exceed the estimated throughput.

Note that the first application executed by the first terminal device 200 and the second application executed by the second terminal device 200 may be applications that provide the same service, or may be applications that provide different services. Furthermore, one terminal device 200 may execute a plurality of applications (for example, first and second applications).

Here, it is assumed that the communication device 100 has acquired, from the first terminal device 200, high/medium/low communication rates (TP_APP1_H/M/L) as the communication rate (throughput) at each level of the communication quality requested in the first application. Additionally, it is assumed that the communication device 100 has acquired, from the second terminal device 200, high/medium/low communication rates (TP_APP2_H/M/L) as the communication rate (throughput) at each level of the communication quality requested in the second application.

In this case, it is assumed that the estimated throughput (TP_L1*k) is the requested throughput (TP_APP1_L+TP_APP2_L) or more. In this case, the communication device 100 selects the communication rate that maximizes the total value of the throughputs (TP_APP1_H/M/L, TP_APP2_H/M/L) in the individual applications. For example, it is assumed that the communication device 100 selects TP_APP1_H as the communication rate (throughput) of the first application and selects TP_APP2_M as the communication rate (throughput) of the second application. Note that the total value of the selected throughput (TP_APP1_H+TP_APP2_M) is set so as not to exceed the estimated throughput (TP_L1*k).

In this manner, after having selected the communication rate for each application, the communication device 100 requests the terminal device 200 to reduce the communication rate as necessary (Step S205). For example, the communication device 100 requests the second terminal device 200 to reduce the communication quality from "high (H)" to "medium (M)". In other words, the communication device 100 requests the second terminal device 200 to reduce the throughput from TP_APP2_H to TP_APP2_M.

Note that the communication quality of the first application remains "high (H)" without any change. In this case, the communication device 100 can omit the processing of Step S205.

Next, the communication device 100 updates the throughput threshold, and sets the total value (TP_APP1_H+TP_APP2_M) of the communication rate for each application selected in Step S204 as a new throughput threshold (Step S206).

When the estimated throughput as a result of the determination in Step S203 is below the requested throughput (Step S203; No), the communication device 100 updates the throughput threshold (Step S207). Specifically, the communication device 100 sets a total value (TP_APP1_L+TP_APP2_L) of the communication rate (throughput) with the lowest communication quality in each application, as a new throughput threshold.

Next, the communication device 100 requests the base station device 300 to change the beam (Step S208). At this time, the communication device 100 can request the beam change including the communication quality (for example, a measurement result of a radio wave propagation environment) of each beam.

In response to the request for the beam change, the base station device 300 selects a beam to be used for communication. For example, based on the communication quality of each beam acquired from the communication device 100, the base station device 300 selects a beam with the highest communication quality (for example, the beam strength is the highest) as a beam to be used for communication. The base station device 300 notifies the communication device 100 of the selected beam.

The communication device 100 changes a beam to be used for communication based on the notification from the base station device 300 (Step S209).

As described above, the communication device 100 according to the first embodiment of the present disclosure includes the communication unit 110 and the control unit 150. The communication unit 110 performs wireless communication using one of the plurality of beams. The control unit 150 acquires service communication quality (for example, the communication rate) corresponding to the quality requested on a service. Based on the radio wave propagation environment, the control unit 150 obtains, by estimation, an estimated communication quality (for example, the estimated throughput described above) achievable by the communication unit 110.

Even in a case where the communication quality of a non-currently working beam, a beam which is not being used for communication, is higher than the communication quality of a currently working beam which is being used for communication, the control unit 150 maintains the communication by the currently working beam in a case where the estimated communication quality is the service communication quality or more. In a case where the estimated communication quality is below the service communication quality, the control unit 150 determines switching of the beam to be used for communication. The control unit 150 requests the base station device 300 to switch the currently working beam based on the determination, thereby executing switching of the currently working beam.

With this configuration, the communication device 100 can reduce the frequency of switching the currently working beam, and can suppress degradation in the continuity and low latency of communication that can be caused by switching the currently working beam.

Furthermore, the communication device 100 performs a change to the communication rate with the best service quality within the allowable range of the service quality request. For example, in a case where the estimated throughput satisfies the requested throughput, the communication device 100 selects the communication rate of each service so as to maximize the total value of the throughput within a range not exceeding the throughput threshold.

With this configuration, even when the communication quality of the currently working beam is degraded, the communication device 100 can maintain the communication with the base station device 300 without switching the currently working beam.

### <<3. First modification>>

In the first embodiment described above, the communication device 100 starts communication with the base station device 300 at the communication rate with the highest quality level, and then reduces the quality level or switches the currently working beam in accordance with the radio wave propagation environment. However, the configuration of communication is not limited thereto. For example, the communication device 100 may start communication with the base station device 300 at a communication rate with the lowest quality level.

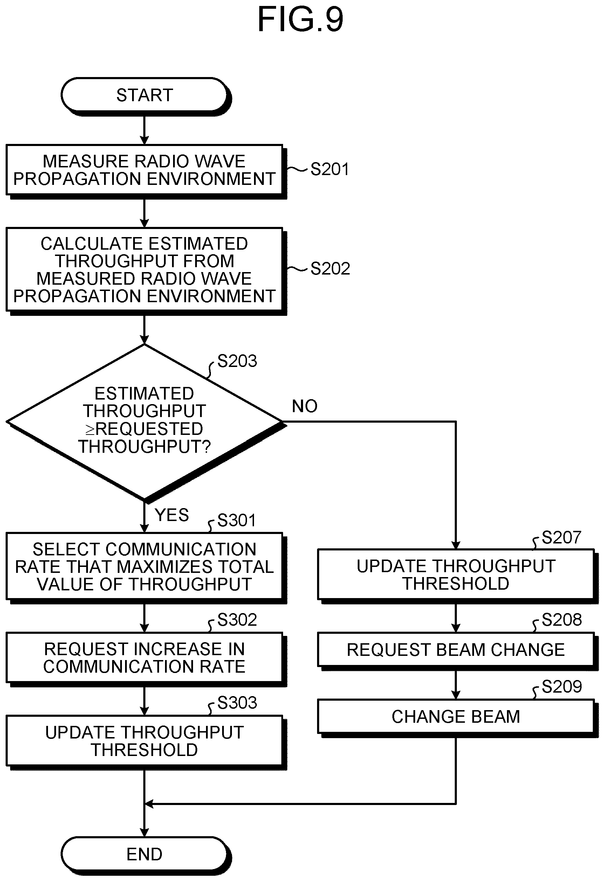

FIG. 9 is a flowchart illustrating an example of a flow of beam switching processing according to a first modification of the first embodiment of the present disclosure.

The communication device 100 sets a throughput total value (TP_APP_SUM_L) having the lowest quality level among the throughput total values of the individual quality levels calculated in the threshold calculation processing, as the throughput threshold. In addition, the communication device 100 sets the throughput total value (TP_APP_SUM_L) having the lowest quality level, as the minimum requested throughput (requested throughput).

The communication device 100 starts communication with the base station device 300 at a communication rate (throughput) having the lowest quality level in all applications. Thereafter, the communication device 100 executes the beam switching processing illustrated in FIG. 9 at a measurement cycle. Note that the same processes as those in the beam switching processing illustrated in FIG. 8 are denoted by the same reference numerals, and description thereof will be omitted.

When the estimated throughput is the requested throughput or more (Step S203; Yes), the communication device 100 selects the communication rate that maximizes the total value (TP_APP_SUM) of the throughput (TP_APP_H/M/L) in each application (Step S301). At this time, the communication device 100 selects the communication rate so as not to allow the total value of the throughput in each application to exceed the estimated throughput (so as to satisfy TP_L1*k>TP_APP_SUM).

For example, it is assumed that the communication device 100 selects TP_APP1_M as the communication rate (throughput) of the first application and selects TP_APP2_L as the communication rate (throughput) of the second application. Note that the selected throughput (TP_APP1_M+TP_APP2_L) is to be a combination maximizing the total value within the range not exceeding the estimated throughput (TP_L1*k).

In this manner, after having selected the communication rate for each application, the communication device 100 requests the terminal device 200 to increase the communication rate as necessary (Step S302). For example, the communication device 100 requests the first terminal device 200 to increase the communication quality from "low (L)" to "medium (M)". In other words, the communication device 100 requests the first terminal device 200 to increase the throughput from TP_APP2_L to TP_APP2_M.

Note that the communication quality of the second application remains "low (L)" without any change. In this case, the communication device 100 can omit the processing of Step S302.

Next, the communication device 100 updates the throughput threshold, and sets the total value (TP_APP1_M+TP_APP2_L) of the communication rate for each application selected in Step S301, as a new throughput threshold (Step S303).

In this manner, the communication device 100 according to the first modification of the first embodiment of the present disclosure starts communication with the base station device 300 at the communication rate with the lowest quality level, and then increases the quality level or switches the currently working beam in accordance with the radio wave propagation environment.

Also in this case, similarly to the first embodiment, the communication device 100 can reduce the frequency of beam switching, and can suppress degradation in the continuity and low latency of communication that can be caused by switching the currently working beam.

### <<4. Second modification>>

In the first embodiment and the first modification described above, the communication device 100 starts communication with the base station device 300 at the communication rate with the highest or lowest quality level, and then reduces or increases the quality level or switches the currently working beam in accordance with the radio wave propagation environment. However, the configuration of communication is not limited thereto. For example, the communication device 100 may adaptively select reduction or increase of the quality level in accordance with the radio wave propagation environment.

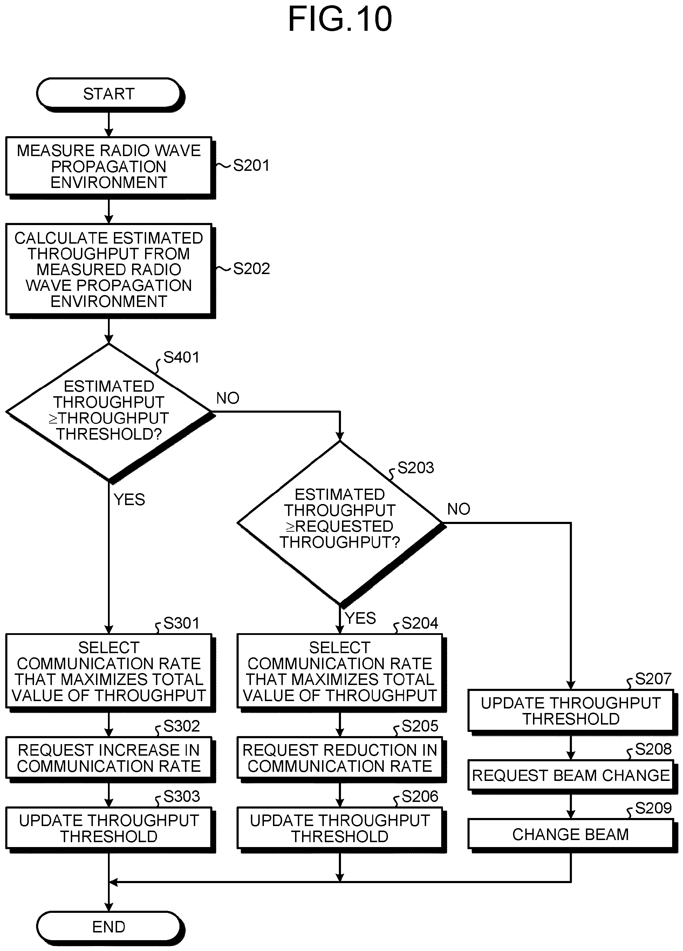

FIG. 10 is a flowchart illustrating an example of a flow of beam switching processing according to a second modification of the first embodiment of the present disclosure.

The communication device 100 sets a throughput total value (TP_APP_SUM_H) having the highest quality level among the throughput total values of the individual quality levels calculated in the threshold calculation processing, as the throughput threshold. In addition, the communication device 100 sets the throughput total value (TP_APP_SUM_L) having the lowest quality level, as the minimum requested throughput (requested throughput).

The communication device 100 starts communication with the base station device 300 at a communication rate (throughput) having the highest quality level in all applications. Thereafter, the communication device 100 executes the beam switching processing illustrated in FIG. 10 at a measurement cycle. Note that the same processes as those in the beam switching processing illustrated in FIGS. 8 and 9 are denoted by the same reference numerals, and description thereof will be omitted.

After having calculated the estimated throughput from the radio wave propagation environment measured in Step S202, the communication device 100 determines whether the estimated throughput is the throughput threshold or more (Step S401).

In a case where the estimated throughput is the throughput threshold or more (Step S401; Yes), the communication device 100 executes the processing of Step S301 to Step S303. In contrast, in a case where the estimated throughput is below the throughput threshold (Step S401; No), the communication device 100 executes the determination processing of Step S203, and executes the processing of Steps S204 to S209 in accordance with the determination result.

Although the communication device 100 starts communication with the base station device 300 at a communication rate (throughput) having the highest quality level in all applications, the configuration of communication is not limited to this. The communication device 100 may start communication with the base station device 300 at a communication rate (throughput) having the lowest quality level in all applications. Alternatively, the communication device 100 may start communication at the communication rate used in the previous communication. In the present modification, the communication device 100 can start communication with the base station device 300 at any communication rate.

### <<5. Second embodiments

In the first embodiment and the first and second modifications described above, the communication device 100 executes the beam switching processing using the communication rate acquired at the time of establishment of communication, but the communication is not limited thereto. For example, the communication device 100 may perform re-setting of the communication rate and use the determined communication rate when executing the beam switching processing.

In other words, in contrast to the first embodiment and the first and second modifications in which the communication rate is statically set, a second embodiment of the present disclosure dynamically switches the communication rate. For example, the terminal device 200 according to the present embodiment dynamically sets the communication rate for each quality level according to the usage status and the use purpose of the service (for example, streaming of a video source) on the information processing device 400 (refer to FIG. 1), and notifies the communication device 100 of the determined communication rate.

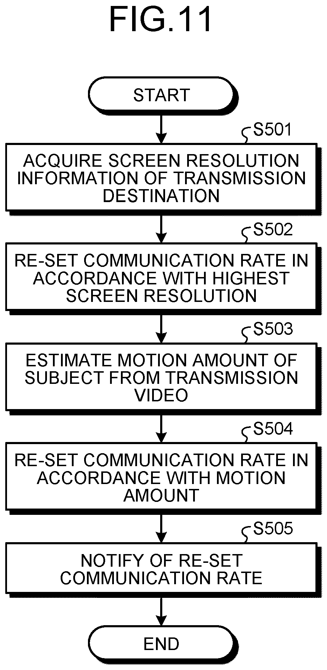

FIG. 11 is a flowchart illustrating an example of a flow of communication rate setting processing according to the second embodiment of the present disclosure. The communication rate setting processing illustrated in FIG. 11 is executed by the terminal device 200 at a predetermined setting cycle, for example. Note that the setting cycle may be a preset cycle or a cycle set by a user or the like.

First, the terminal device 200 acquires the usage information regarding the usage status of the service. Here, it is assumed that the terminal device 200 performs a service of real-time streaming of a video. In this case, the terminal device 200 acquires the screen resolution information of the video transmission destination (for example, the information processing device 400) as the usage information (Step S501).

In a case where the terminal device 200 is transmitting a video to a plurality of information processing devices 400, the terminal device 200 acquires, as the usage information, screen resolution information regarding resolution of an input/output device that displays the video from the plurality of information processing devices 400 to which the video is currently transmitted.

The terminal device 200 re-sets the communication rate (throughput) according to the highest screen resolution among the acquired one or more pieces of screen resolution information (Step S502). For example, the terminal device 200 re-sets the throughput for each quality level so as to meet the highest screen resolution.

For example, in the case of a real-time video streaming service, there is a possibility that a user who receives service provision, in other words, the information processing device 400 that displays a video is switched depending on the time. The terminal device 200 collects information regarding the information processing device 400 using the service at a predetermined setting cycle, and based on the collected information, the terminal device 200 sets a communication rate most suitable for the information processing device 400 using the service at that point in time.

Furthermore, the terminal device 200 can re-set the communication rate according to the service.

For example, the terminal device 200 estimates a motion amount of a subject from an inter-frame differential amount in the video to be transmitted (Step S503). The terminal device 200 re-sets the communication rate according to the motion amount (Step S504). For example, in a case where the video to transmit is a video with a small motion amount, that is, with little motion, the terminal device 200 reduces the throughput (communication rate). In this manner, the terminal device 200 re-sets the communication rate for each quality level according to the nature of the service to be provided.

The terminal device 200 notifies the communication device 100 of the re-set communication rate (Step S505). After having received the notification, the communication device 100 executes threshold setting processing based on the re-set communication rate, updates the throughput threshold and the requested throughput according to the execution result, and executes beam switching processing.

With this configuration, the communication device 100 can determine beam switching based on the communication rate according to the usage status or usage purpose of the service (for example, streaming of a video source).

In FIG. 11, the terminal device 200 re-sets the communication rate based on the service usage status (for example, screen resolution information of the information processing device 400) and then re-sets the communication rate based on the service provision status (for example, the motion amount of the subject). However, the re-setting of the communication rate is not limited thereto.

For example, the terminal device 200 may re-set the communication rate based on the service provision status and may then re-set the communication rate based on the service usage status. Alternatively, the terminal device 200 may execute the re-setting of the communication rate based on the service usage status and the re-setting of the communication rate based on the service provision status as mutually different processes. In this case, the cycle of re-setting the communication rate based on the service usage status may be different from the cycle of re-setting the communication rate based on the service provision status.

### <<6. Third embodiments

In the first and second embodiments and the first and second modifications described above, a communication device 100A changes the beam when the actually measured radio wave propagation environment degrades and the requested throughput cannot be maintained. However, the beam switching is not limited thereto. For example, the communication device 100A may predict a change in the radio wave propagation environment and may determine beam switching according to the prediction result.

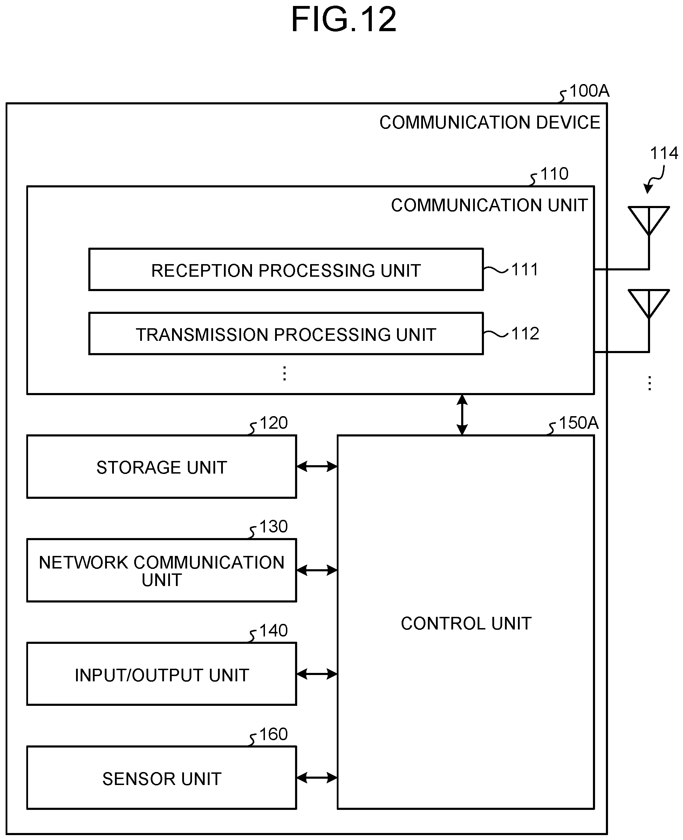

FIG. 12 is a block diagram illustrating a configuration example of the communication device 100A according to a third embodiment of the present disclosure. The communication device 100A illustrated in FIG. 12 is different from the communication device 100 illustrated in FIG. 5 in including a sensor unit 160 and in that a control unit 150A trains a prediction model of predicting a radio wave propagation environment and predicts the radio wave propagation environment using the trained prediction model.

The sensor unit 160 is a sensor that acquires information related to the position or attitude of the communication device 100A. For example, the sensor unit 160 is a global navigation satellite system (GNSS) sensor. Here, the GNSS sensor may be a global positioning system (GPS) sensor, a GLONASS sensor, a Galileo sensor, or a quasi-zenith satellite system (QZSS) sensor. The GNSS sensor can be rephrased as a GNSS receiving module. Note that the sensor unit 160 is not limited to the GNSS sensor, and may be an acceleration sensor, for example. Furthermore, the sensor unit 160 may be an inertial measurement unit (IMU) or a geomagnetic sensor. Furthermore, the sensor unit 160 may be a combination of a plurality of the sensors.

The control unit 150A trains a prediction model of predicting the radio wave propagation environment based on the information acquired by the sensor unit 160. Furthermore, the control unit 150A predicts the radio wave propagation environment using the prediction model, and determines beam switching according to the prediction result.

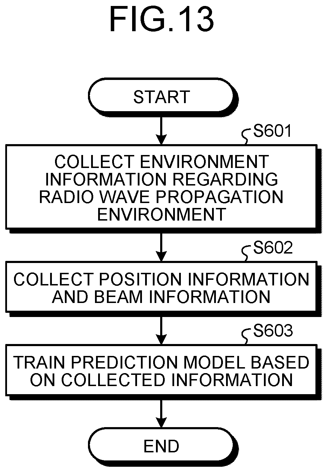

FIG. 13 is a flowchart illustrating an example of a flow of training processing according to the third embodiment of the present disclosure. The training processing illustrated in FIG. 13 is executed by the communication device 100A before communication is established.

First, the communication device 100A collects environment information regarding the radio wave propagation environment (Step S601). It is assumed that, for example, the communication device 100A stores the measurement result of the radio wave propagation environment measured in the measurement cycle during communication, in the storage unit 120 as environment information. When executing the training processing, the communication device 100A acquires the environment information stored in the storage unit 120.

Next, the communication device 100A collects position information and beam information corresponding to the environment information (Step S602). The position information includes information regarding the position of the communication device 100A and information such as cell ID, for example. The beam information includes beam ID and information regarding an antenna to be used, for example.

The communication device 100A acquires the above-described position information and beam information when measuring the radio wave propagation environment in the measurement cycle during communication, for example. The communication device 100A is supposed to store the position information and the beam information in the storage unit 120 in association with the measurement result of the radio wave propagation environment. When executing the training processing, the communication device 100A acquires the position information and the beam information stored in the storage unit 120.

The communication device 100A trains a prediction model based on the collected information (Step S603). For example, the communication device 100A trains a prediction model having the position information and the beam information as input and the environment information of the radio wave propagation environment as output. For example, the communication device 100A trains the prediction model with supervised learning using the information collected in Steps S601 and S602.

For example, the communication device 100A performs training (or re-training) of the prediction model after the end of the communication using the beam with the base station device 300 and before the start of the next communication.

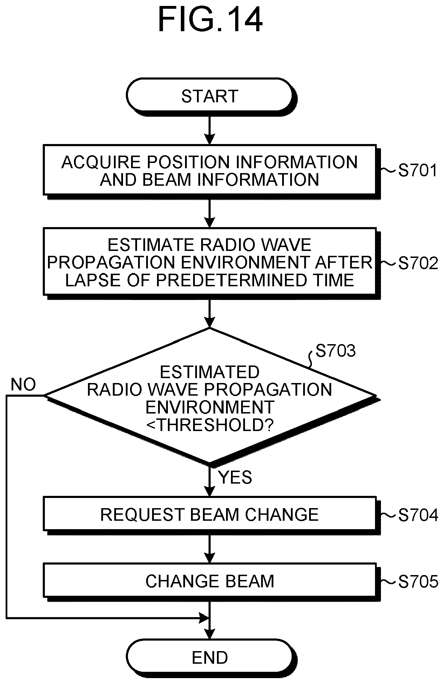

Next, the communication device 100A executes prediction switching processing of determining beam switching using the prediction model. FIG. 14 is a flowchart illustrating an example of a flow of prediction switching processing according to the third embodiment of the present disclosure.

The prediction switching processing illustrated in FIG. 14 is executed by the communication device 100A at a predetermined prediction cycle. Note that the prediction cycle may be a preset cycle or a cycle set by a user or the like.

The prediction switching processing illustrated in FIG. 14 may be executed in place of the beam switching processing illustrated in FIGS. 8 to 10, or may be executed in parallel with the beam switching process.

The communication device 100A acquires position information and beam information (Step S701). For example, the communication device 100A acquires position information based on a sensing result obtained by the sensor unit 160. Furthermore, the communication device 100A acquires beam information such as beam ID from the base station device 300, for example.

The communication device 100A estimates a radio wave propagation environment after a lapse of a predetermined time (Step S702). For example, the communication device 100A inputs the position information and the beam information acquired in Step S701 to the prediction model, and acquires environment information as the output result as the radio wave propagation environment after a lapse of the predetermined period.

The communication device 100A determines whether the estimated radio wave propagation environment is below a threshold (Step S703). Here, the threshold is defined as a value indicating a radio wave propagation environment necessary for satisfying the requested throughput. That is, the communication device 100A determines whether the estimated radio wave propagation environment can satisfy the requested throughput.

When the estimated radio wave propagation environment satisfies the requested throughput, that is, when the estimated radio wave propagation environment is the threshold or more (Step S703; No), the communication device 100A ends the processing.

When the estimated radio wave propagation environment does not satisfy the requested throughput, that is, when the estimated radio wave propagation environment is below the threshold (Step S703; Yes), the communication device 100A determines to switch the beam and requests the base station device 300 to change the beam (Step S704).

After making the beam change request, the communication device 100A changes the beam according to the instruction of the base station device 300 (Step S705).

Although the communication device 100A here changes the beam in accordance with whether the estimated radio wave propagation environment is below the threshold, the beam change is not limited thereto. For example, the communication device 100A may change the beam in accordance with whether the radio wave propagation environment degrades by a predetermined value or more at a point after a lapse of a predetermined period. In this case, the communication device 100A determines to change the beam when the radio wave propagation environment degrades by a predetermined value or more.

Alternatively, for example, the communication device 100A may calculate an estimated throughput based on the estimated radio wave propagation environment, and may perform beam switching determination or communication rate selection based on the estimated throughput obtained by calculation. In this case, for example, in the beam switching processing illustrated in FIGS. 8 to 10, the communication device 100A executes the processing using the estimated radio wave propagation environment instead of the measured radio wave propagation environment.

In this manner, in the third embodiment of the present disclosure, the communication device 100A predicts the radio wave propagation environment after the lapse of the predetermined time, and determines beam switching based on the prediction result. With this configuration, the communication device 100A can switch the beam before the radio wave propagation environment actually degrades, and can more reliably maintain the continuity of communication.

### <<7. Other embodiments>>

Each of the above-described embodiments and modifications is an example, and various alterations and applications are possible.

For example, in each of the above-described embodiments and modifications, the number of beams used for communication between the communication device 100 and the base station device 300 is one, but the number of beams is not limited thereto. For example, it is allowable to use a plurality of beams in communication between the communication device 100 and the base station device 300 in which the base station device 300 communicates with the communication device 100 using a plurality of adjacent beams.

For example, the control unit 250 of the terminal device 200 operates as the application control unit in the above-described embodiments and modifications. However, the configuration is not limited thereto. For example, the communication device 100 may include an application control unit, and the communication device 100 may execute an application that provides a service. Alternatively, the terminal device 200 (or the communication device 100) may operate as the application control unit by executing software provided from the outside.

In the embodiments and the modifications described above, the communication device 100 used as a tethering master device and the terminal device 200 used as a tethering slave device are connected via a wired channel. However, the connection is not limited thereto. The communication device 100 and the terminal device 200 may be connected via a wireless channel.

Furthermore, the communication device 100 performs tethering for the terminal device 200 in the above-described embodiments and modifications. However, the configuration is not limited thereto. The communication device 100 and the terminal device 200 may be implemented as one device. That is, for example, it is allowable to give the terminal device 200 functions similar to those of the communication device 100 to allow the terminal device 200 to directly perform wireless communication with the base station device 300.

The control device that controls the communication device 100 and the terminal device 200 according to the individual embodiments and modifications may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control device. At this time, the control device may be a device (for example, a personal computer) outside the communication device 100 or the terminal device 200. Furthermore, the control device may be a device (for example, the control units 150 and 250) inside the communication device 100 and the terminal device 200, respectively.

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the portions other than the OS may be stored in a medium for distribution, or the portions other than the OS may be stored in a server device so as to be downloaded to a computer, for example.

Furthermore, among individual processing described in the above-described embodiments and modifications, all or a part of the processing described as being performed automatically may be manually performed, or the processing described as being performed manually can be performed automatically by known methods. In addition, the processing procedures, specific names, and information including various data and parameters depicted in the above specifications or drawings can be changed in any manner unless otherwise specified. For example, a variety of information illustrated in each of the drawings are not limited to the information illustrated.

In addition, each of components of each device is provided as a functional and conceptional illustration and thus does not necessarily need to be physically configured as illustrated. That is, the specific form of distribution/integration of each of the devices is not limited to those illustrated in the drawings, and all or a part thereof may be functionally or physically distributed or integrated into arbitrary units according to various loads and use situations. This configuration by distribution and integration may be performed dynamically.

Furthermore, the above-described embodiments can be appropriately combined within a range implementable without contradiction of processing. Furthermore, the order of individual steps illustrated in the flowcharts of the above-described embodiment can be changed as appropriate.

Furthermore, for example, the present embodiment can be implemented as any configuration constituting a device or a system, for example, a processor as a large scale integration (LSI) or the like, a module using a plurality of processors or the like, a unit using a plurality of modules or the like, and a set obtained by further adding other functions to the unit, or the like (that is, a configuration of a part of the device).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a configuration of cloud computing in which one function is cooperatively shared and processed by a plurality of devices via a network.

### <<8. Conclusion>>

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technique can also have the following configurations.
(1) A communication device including:
   a communication unit that performs wireless communication using one of a plurality of beams; and
   a control unit, the control unit being configured to perform operations including:
      acquiring service communication quality corresponding to quality requested on a service;
      obtaining, by estimation, an estimated communication quality achievable by the communication unit, based on a radio wave propagation environment;
      maintaining communication by a currently working beam which is being used for the wireless communication in a case where the estimated communication quality is the service communication quality or more even when the communication quality of a non-currently working beam which is not being used for the wireless communication is higher than the communication quality of the currently working beam; and
      determining switching of the currently working beam when the estimated communication quality is below the service communication quality.
(2) The communication device according to (1), in which the service is a real-time service which provides information to a user in real time.
(3) The communication device according to (1) or (2), in which the control unit obtains the estimated communication quality for each of a plurality of quality levels requested for the service.
(4) The communication device according to (3),
   in which the control unit performs operations including:
   starting communication with the communication quality with the highest quality level; and
   determining to reduce the quality level of the communication quality when the estimated communication quality is the service communication quality or more.
(5) The communication device according to (3),
   in which the control unit performs operations including:
   starting communication with the communication quality with the lowest quality level; and
   determining to increase the quality level of the communication quality when the estimated communication quality is the service communication quality or more.
(6) The communication device according to (3),
   in which, when the wireless communication is being performed at a predetermined quality level,
   the control unit makes determinations including:
      determining to increase the predetermined quality level when the estimated communication quality is the communication quality of the wireless communication or more; and
      determining to reduce the predetermined quality level when the estimated communication quality is below the communication quality achieved by the wireless communication and the estimated communication quality is the service communication quality or more.
(7) The communication device according to any one of (1) to (6), in which the communication quality is a total value of the communication quality requested for each of a plurality of applications that provide the service.
(8) The communication device according to any one of (1) to (7), in which the control unit determines switching of the beam based on the service communication quality set in accordance with a usage state of the service.
(9) The communication device according to any one of (1) to (8),
   in which the control unit performs operations including:
   estimating a predicted radio wave propagation environment after a lapse of a predetermined time by using a prediction model having position information of the communication device as input and having information related to the radio wave propagation environment as output; and
   determining switching of the currently working beam in accordance with the predicted radio wave propagation environment.
(10) The communication device according to (9), in which the control unit trains the prediction model by using information related to the radio wave propagation environment obtained by measurement and the position information of the communication device obtained at the time of the measurement of the radio wave propagation environment.
(11) A communication method including:
   performing wireless communication using one of a plurality of beams;
   acquiring service communication quality corresponding to quality requested on a service;
   obtaining, by estimation, an estimated communication quality achievable in the wireless communication, based on a radio wave propagation environment;
   maintaining communication by a currently working beam which is being used for the wireless communication in a case where the estimated communication quality is the service communication quality or more even when the communication quality of a non-currently working beam which is not being used for the wireless communication is higher than the communication quality of the currently working beam; and
   determining switching of the currently working beam when the estimated communication quality is below the service communication quality.
(12) A communication system including:
   a base station device; and
   a communication device that performs wireless communication with the base station device;
   in which the communication device includes:
   a communication unit that performs the wireless communication with the base station device by using one of a plurality of beams; and
   a control unit, the control unit being configured to perform operations including:
      acquiring service communication quality corresponding to quality requested on a service;
      obtaining, by estimation, an estimated communication quality achievable by the communication unit, based on a radio wave propagation environment;
      maintaining communication by a currently working beam which is being used for the wireless communication in a case where the estimated communication quality is the service communication quality or more even when the communication quality of a non-currently working beam which is not being used for the wireless communication is higher than the communication quality of the currently working beam; and
      requesting the base station device for switching of the currently working beam when the estimated communication quality is below the service communication quality, and
      the base station device performs operations including:
         selecting the currently working beam, which is to be used for the wireless communication, in response to the request from the communication device; and
         instructing the communication device to change to the currently working beam selected.

### Reference Signs List

1 COMMUNICATION SYSTEM
100 COMMUNICATION DEVICE
110, 310 COMMUNICATION UNIT
120, 240, 320 STORAGE UNIT
130, 210, 330 NETWORK COMMUNICATION UNIT
140, 220 INPUT/OUTPUT UNIT
150, 250, 340 CONTROL UNIT
160, 230 SENSOR UNIT
200 TERMINAL DEVICE
300 BASE STATION DEVICE
400 INFORMATION PROCESSING DEVICE

## Claims

1. A communication device comprising:
a communication unit that performs wireless communication using at least one of a plurality of beams; and
a control unit, the control unit being configured to perform operations including:
acquiring service communication quality corresponding to a quality level requested on a service;
obtaining, by estimation, an estimated communication quality achievable by the communication unit, based on a radio wave propagation environment;
maintaining communication by a currently working beam which is being used for the wireless communication in a case where the estimated communication quality is the service communication quality or more even when a beam quality of a non-currently working beam which is not being used for the wireless communication is higher than the beam quality of the currently working beam; and
determining switching of the currently working beam when the estimated communication quality is below the service communication quality.

2. The communication device according to claim 1, wherein the service is a real-time service which provides information to a user in real time.

3. The communication device according to claim 1, wherein the control unit obtains the estimated communication quality for each of a plurality of quality levels requested for the service.

4. The communication device according to claim 3,
wherein the control unit starts communication with the service communication quality with the highest quality level, and
when the estimated communication quality is the service communication quality or more, the control unit determines to reduce the quality level to a highest quality level within a range in which the estimated communication quality is the service communication quality or more.

5. The communication device according to claim 3,
wherein the control unit starts communication with the service communication quality with the lowest quality level, and
when the estimated communication quality is the service communication quality or more, the control unit determines to increase the quality level to a highest quality level within a range in which the estimated communication quality is the service communication quality or more.

6. The communication device according to claim 3,
wherein the control unit starts communication at the service communication quality of the quality level being a predetermined level,
when the estimated communication quality is the service communication quality or more, the control unit determines to increase the quality level to a highest quality level within a range in which the estimated communication quality is the service communication quality or more, and
when the estimated communication quality is below the service communication quality, the control unit determines to reduce the quality level to a highest quality level within a range in which the estimated communication quality is the service communication quality or more.

7. The communication device according to claim 1, wherein the service communication quality is a total value of the service communication quality requested for each of a plurality of applications that provide the service.

8. The communication device according to claim 1, wherein the control unit determines switching of the beam based on the service communication quality set in accordance with a usage state of the service.

9. The communication device according to claim 1,
wherein the control unit performs operations including:
estimating a predicted radio wave propagation environment after a lapse of a predetermined time by using a prediction model having position information of the communication device as input and having information related to the radio wave propagation environment as output; and
determining switching of the currently working beam in accordance with the predicted radio wave propagation environment.

10. The communication device according to claim 9, wherein the control unit trains the prediction model by using information related to the radio wave propagation environment obtained by measurement and the position information of the communication device obtained at the time of the measurement of the radio wave propagation environment.

11. A communication method comprising:
performing wireless communication using at least one of a plurality of beams;
acquiring service communication quality corresponding to quality requested on a service;
obtaining, by estimation, an estimated communication quality achievable in the wireless communication, based on a radio wave propagation environment;
maintaining communication by a currently working beam which is being used for the wireless communication in a case where the estimated communication quality is the service communication quality or more even when the beam quality of a non-currently working beam which is not being used for the wireless communication is higher than the beam quality of the currently working beam; and
determining switching of the currently working beam when the estimated communication quality is below the service communication quality.

12. A communication system comprising:
a base station device; and
a communication device that performs wireless communication with the base station device,
wherein the communication device includes:
a communication unit that performs the wireless communication with the base station device by using at least one of a plurality of beams; and
a control unit, the control unit being configured to perform operations including:
acquiring service communication quality corresponding to quality requested on a service;
obtaining, by estimation, an estimated communication quality achievable by the communication unit, based on a radio wave propagation environment;
maintaining communication by a currently working beam which is being used for the wireless communication in a case where the estimated communication quality is the service communication quality or more even when a beam quality of a non-currently working beam which is not being used for the wireless communication is higher than the beam quality of the currently working beam; and
requesting the base station device for switching of the currently working beam when the estimated communication quality is below the service communication quality, and
the base station device performs operations including:
selecting the currently working beam, which is to be used for the wireless communication, in response to the request from the communication device; and
instructing the communication device to change to the currently working beam selected.
